# EUROPÄISCHE PATENTSCHRIFT

(11) **EP 0 819 710 B1**
(45) Veröffentlichungstag und Bekanntmachung des Hinweises auf die Patenterteilung: **24.10.2001**
(21) Anmeldenummer: 97110934.3
(22) Anmeldetag: 02.07.1997
(51) Int. Cl.: C08F 279/02, C08G 18/63, C08L 51/04

(54) **Neue festkörperreiche 2K-PUR-Bindemittelkombinationen**
New high solid binder compositions with two-component polyurethane
Nouveaux systèmes de liants a haute teneur en solide a base de polyurethanne à deux composants

(30) Priorität: 15.07.1996 DE 19628444
(43) Veröffentlichungstag der Anmeldung: 21.01.1998
(73) Patentinhaber: BAYER AG, 51368 Leverkusen (DE)
(72) Erfinder: Wamprecht, Christian, Dr., 41472 Neuss (DE); Sonntag, Michael, Dr., 51519 Odenthal (DE); Margotte, Dieter, Dr., 47807 Krefeld (DE)

(56) Entgegenhaltungen:
- EP-A- 0 279 311
- EP-A- 0 638 591
- EP-A- 0 778 298

## Beschreibung

Die Erfindung betrifft neue, OH-funktionelle Bindemittelkomponenten auf Polyacrylatbasis, ein Verfahren zu ihrer Herstellung und deren Verwendung zur Herstellung von Überzügen. Durch Kombination der erfindungswesentlichen, OH-funktionellen Bindemittelkomponenten mit Polyisocyanaten werden neue, festkörperreiche Bindemittelkombinationen erhalten, die zu hochwertigen Beschichtungen ausgehärtet werden können. Neben hervorragender Filmoptik sowie hoher Lösemittel- und Chemikalienbeständigkeit weisen diese Überzüge bei Raumtemperatur eine sehr schnelle physikalische Trocknung und chemische Vernetzung sowie eine gute Oberflächenhärte auf.

Der Vorteil von festkörperreichen Polyacrylatharzen ist in der Verringerung der Emission organischer Verbindungen, vorzugsweise Lösemittel, bei Applikation des Lackes zu sehen. Um diese festkörperreichen Lackformulierungen zu erhalten, müssen entsprechende Polyacrylatharze mit niedrigen Viskositäten, d. h. geringen Molmassen, eingesetzt werden.

Es ist bekannt, daß zur Herstellung niedrigviskoser Polymerisate die radikalische Lösungsmittelpolymerisation eingesetzt werden kann (z.B. EP-A 408 858, EP-A 398 387, US-A 4 145 513). Zum Teil nachteilig ist dabei, daß die Eigenschaften der Polymerisate durch den Einsatz beträchtlicher Mengen Polymerisationsregler sowie deren Folgeprodukte beeinträchtigt werden. Insbesondere können die als Polymerisationsregler eingesetzten Thiole übel riechen oder sogar giftig sein. In der EP-A 225 808 bzw. EP-A 225 809 werden daher α-Olefine, wie z. B. 1-Octen oder 1-Decen, die keinen unangenehmen Geruch besitzen, als Regler verwendet. 2K-PUR-Lacke auf Basis der Polyacrylatharze gemäß EP-A 225 809 und aliphatischer Lackpolyisocyanate haben jedoch eine zu langsame physikalische Trocknung für die Anwendung in der Autoreparatur- und Großfahrzeuglackierung, wie Vergleichsversuche zeigen.

Die EP-A 635 523, die EP-A 638 591 und die EP-A 680 977 beschreiben festkörperreiche Polyacrylatharze, die durch Substanzpolymerisation hergestellt und danach mit einem geeigneten Lösemittel verdünnt werden. Bei der EP-A 635 523 wurde versucht, den aus der Lösemittelpolymerisation bekannten Effekt der Herstellung von unimodal eng verteilten, festkörperreichen Polyacrylatharzen bei Verwendung von tert.-Amylgruppen aufweisenden Peroxiden auf die Substanzpolymerisation zu übertragen. Wie erwartet konnte nachgewiesen werden, daß mit tert.-Amylgruppen aufweisenden Peroxiden niedrigviskosere Polyacrylatharze erhalten werden als mit tert.-Butylgruppen aufweisenden Peroxiden. Die Vorteile dieser Substanzpolymerisation gegenüber der Lösemittelpolymerisation sind jedoch nicht eindeutig zu erkennen, weil entsprechende Vergleichsversuche fehlen. Die in den Beispielen hergestellten Polyacrylatharze weisen bei einem Festgehalt von 70 Gew.-% Viskositäten bei 23 °C zwischen 2.790 und 9.130 mPa.s auf, liegen damit eher im medium- statt high-solids-Bereich und genügen daher heutigen Anforderungen an festkörperreiche Lacke nicht.

Die EP-A 638 591 beschreibt festkörperreiche Copolymerisate, die durch Verwendung von (Meth)Acrylatmonomeren mit sterisch anspruchsvollen (Cyclo)alkylresten eine relativ niedrige Viskosität bei hohem Festgehalt besitzen. Bei der Herstellung dieser Copolymerisate durch Substanzpolymerisation wird in allen aufgeführten Beispielen ein Monoepoxid (Cardura E 10) als Reaktionsmedium vorgelegt. Dieses Monoepoxid reagiert während der Polymerisation mit der zudosierten (Meth)Acrylsäure ab und wird somit in das Polyacrylat eingebaut. Durch diese Reaktion entstehen überwiegend sekundär gebundene Hydroxylgruppen, die neben den durch hydroxyfunktionelle Monomere eingeführten primären Hydroxylgruppen (Hydroxyethylmethacrylat) oder sekundären Hydroxylgruppen (Hydroxypropylmethacrylat) für die Reaktion mit dem als Vernetzer dienenden Polyisocyanat zur Verfügung stehen. Die EP-A 680 977 entspricht weitgehend der EP-A 638 591, außer daß die Copolymerisate der EP-A 680 977 eine Säurezahl von mindestens 15 mg KOH/g aufweisen müssen.

Sekundäre Hydroxylgruppen haben gegenüber Polyisocyanaten eine deutlich geringere Reaktivität als primäre Hydroxylgruppen. Daher erreichen 2K-PUR-Lacke auf Basis von Polyacrylatharzen mit überwiegend (>30 %) sekundär gebundenen Hydroxylgruppen erst nach etlichen Tagen eine ausreichende Vernetzungsdichte und damit verbunden eine zufriedenstellende Lösemittelbeständigkeit. Gerade bei der Autoreparatur- und Großfahrzeuglackierung ist jedoch neben einer schnellen physikalischen Trocknung auch eine rasche chemische Vernetzung dringend notwendig, um einen möglichst schnellen Einsatz des Fahrzeuges wieder zu ermöglichen.

Es stellte sich daher die Aufgabe, neue hydroxyfunktionelle Copolymerisate nach dem einfachen Lösemittelpolymerisationsverfahren bereitzustellen, welche in Kombination mit (cyclo)aliphatischen Lackpolyisocyanaten hochfestkörperreiche Lacke liefern, die neben einer schnellen physikalischen Trocknung auch eine rasche chemische Vernetzung zeigen. Im Gegensatz zu Beschichtungen mit Lacken des Standes der Technik sollten mit den neuen High-Solids-Lacken hochwertige Beschichtungen zu erzielen sein, die nach einer Härtungszeit von nur wenigen Tagen eine ausgezeichnete Lösemittelfestigkeit aufweisen und damit die rasche Gebrauchsfähigkeit des Fahrzeuges ermöglichen. Es wurde nun überraschend gefunden, daß Lacke auf Basis von Bindemittelkombinationen aus speziellen festkörperreichen Pfropfcopolymerisaten und Polyisocyanaten einen sehr hohen Festkörpergehalt im verarbeitungsfertigen Zustand besitzen. Diese Lacke liefern Beschichtungen, die bei Raumtemperatur (23°C) eine sehr schnelle physikalische Trocknung und eine rasche chemische Vernetzung, d.h. eine ausgezeichnete Lösemittelfestigkeit nach nur 1 bis 2 Tagen besitzen. Das sehr gute Gesamteigenschaftsprofil der erhaltenen Lackfilme wie Härte, Elastizität, Chemikalien- und Wetterbeständigkeit gestattet den Einsatz in der Fahrzeuglackierung, vorzugsweise in der Autoreparatur- und Großfahrzeuglackierung. Weitere Anwendungsgebiete liegen im Bereich Korrosionsschutz bzw. Holz- und Möbellackierung.

Gegenstand der Erfindung sind Bindemittelkombinationen aus
A) 95 bis 40 Gew.-Teilen, vorzugsweise 90 bis 50 Gew.-Teilen OH-funktioneller Pfropfcopolymerisatharze, hergestellt durch Copolymerisation von
   a) 0,1 bis 10 Gew.-Teilen mindestens eines gegebenenfalls funktionellen Polybutadiens mit einem Molekulargewicht von 500 bis 10.000 und mit mindestens 20 % 1,2-Vinylstruktur,
   b) 5 bis 30 Gew.-Teilen mindestens eines aliphatischen α-Olefins mit 8 bis 16 Kohlenstoffatomen,
   c) 0,1 bis 35 Gew.-Teilen mindestens eines Glycidylesters einer α-Alkylalkanmonocarbonsäure mit 4 bis 30 C-Atomen im Carbonsäurerest,
   d) 10 bis 70 Gew.-Teilen mindestens eines ungesättigten, aromatischen Monomeren wie Styrol, α-Methylstyrol oder Vinyltoluol,
   e) 5 bis 60 Gew.-Teilen mindestens eines Hydroxyalkylesters der Aacryl- und/oder Methacrylsäure mit 2 bis 4 C-Atomen im Hydroxyalkylrest und primär gebundener Hydroxylgruppe,
   f) 0 bis 50 Gew.-Teilen mindestens eines (cyclo)aliphatischen Esters der Acryl- und/oder Methacrylsäure mit 1 bis 12 C-Atomen in der Alkoholkomponente,
   g) 0,1 bis 20 Gew.-Teilen mindestens einer α,β-monoolefinisch ungesättigten Mono- oder Dicarbonsäure mit 3 bis 7 C-Atomen und/oder mindestens eines Maleinsäure- bzw. Fumarsäurehalbesters mit 1 bis 14 C-Atomen im Alkoholrest,
   h) 0 bis 30 Gew.-Teilen weiteren copolymerisierbaren, olefinisch ungesättigten Verbindungen und
B) 5 bis 60 Gew.-Teilen, vorzugsweise 10 bis 50 Gew.-Teilen eines mehrfach funktionellen Vernetzerharzes, beispielsweise Aminoplastharze, wie alkoxylierte Melaminharze, Melamin-Formaldehyd-Kondensationsprodukte, Harnstoffharze, Guanidinharze, Phenolplastharze, Resolharze und bevorzugt, gegebenenfalls blockierte, polyfunktionelle Isocyanate, vorzugsweise oligomere Isocyanate mit Biuret-, Allophanat-, Uretdion-, Urethan- und/oder Isocyanuratstruktur,
wobei jeweils die Summe der Gew.-Teile der Komponenten A) und B) sowie die Summe der Gew.-Teile der Komponenten a) bis h) 100 beträgt und 1 bis 30 % der OH-Gruppen sekundär sind.

Gegenstand der Erfindung ist auch die Verwendung der erfindungsgemäßen Bindemittelkombinationen in der Fahrzeuglackierung, insbesondere der Autoreparatur- und Großfahrzeuglackierung, in der Holz- und Möbellackierung, der allgemeinen Industrielackierung sowie im Bereich Korrosionsschutz.

Die erfindungswesentlichen Pfropfcopolymerisate A) der erfindungsgemäßen Bindemittelkombinationen unterscheiden sich in ihrer chemischen Zusammensetzung ganz wesentlich sowohl von den Polyacrylatpolyolen der EP-A 225 809 als auch den Substanzcopolymerisaten der EP-A 635 523 und der EP-A 638 591. Bezüglich der lacktechnischen Eigenschaften, insbesondere der Trocknungsgeschwindigkeit und der Lösemittelbeständigkeit, ergeben sich Vorteile gegenüber den Produkten der genannten Dokumente, wie in entsprechenden Vergleichsbeispielen nachgewiesen wird.

Ähnliche, jedoch nicht identische Bindemittelkombinationen werden in der EP-B 279 311 beschrieben. Im übrigen sind die erfindungsgemäßen Bindemittelkombinationen insbesondere für ein Anwendungsgebiet bestimmt, welches in dem genannten älteren Dokument nicht angesprochen wird, weil die darin beschriebenen Lacke eine zu lange Trocknungszeit aufweisen und hochflexible Lackfilme einer zu geringen Härte liefern.

Die Herstellung der erfindungswesentlichen Pfropfcopolymerisatharze A) kann durch Copolymerisation der Bestandteile a) bis h) nach üblichen Verfahren erfolgen. Die radikalische Polymerisation in Lösung ist bevorzugt. Dabei werden bei Temperaturen von 150 bis 220°C in Gegenwart von Radikalbildnern monomere und oligomere Bausteine copolymerisiert.

Die Polyacrylatharze A) bestehen bevorzugt aus:
a) 0,3 bis 7,5 Gew.-Teilen eines oder mehrerer, gegebenenfalls funktioneller, Polybutadiene mit einem Molekulargewicht von 500 bis 5.000 und mindestens 30 % 1,2-Vinylstruktur,
b) 5 bis 25 Gew.-Teilen mindestens eines α-Olefins mit 8 bis 12 Kohlenstoffatomen,
c) 0,24 bis 27 Gew.-Teilen mindestens eines Glycidylesters einer α-Alkylalkanmonocarbonsäure mit 5 bis 20 C-Atomen im Carbonsäurerest,
d) 15 bis 65 Gew.-Teilen Styrol,
e) 7,5 bis 55 Gew.-Teilen Hydroxyethylacrylat, Hydroxyethylmethacrylat, Butandiol-1,4-monoacrylat oder deren Mischungen,
f) 0 bis 45 Gew.-Teilen mindestens eines (cyclo)aliphatischen Esters der Acryl- und/oder Methacrylsäure mit 1 bis 10 C-Atomen in der Alkoholkomponente,
g) 0,4 bis 16,5 Gew.-Teilen Acrylsäure, Methacrylsäure, Maleinsäure- bzw. Fumarsäurehalbester mit 1 bis 8 C-Atomen in der Alkoholkomponente oder deren Mischungen und
h) 1 bis 25 Gew.-Teilen Acrylnitril, Methacrylnitril, Hydroxypropyl(meth)-acrylat (bis 10 Gew.-Teile), Vinylester aliphatischer, gegebenenfalls verzweigter Moncarbonsäuren mit 1 bis 10 Kohlenstoffatomen im Säurerest, Di(cyclo)alkylester der Malein- und/oder Fumarsäure mit 1 bis 8 Kohlenstoffatomen im Alkoholrest oder deren Mischungen,
wobei die Summe der Gew.-Teile der Komponenten a) bis h) 100 beträgt und 2 bis 25 % der OH-Gruppen sekundär sind.

Die Polyacrylatharze A) bestehen besonders bevorzugt aus:
a) 0,5 bis 5 Gew.-Teilen eines oder mehrerer, gegebenenfalls funktioneller, Polybutadiene mit einem Molekulargewicht von 500 bis 3.000 und mindestens 40 % 1,2-Vinylstruktur,
b) 5 bis 20 Gew.-Teilen 1-Octen, 1-Decen oder deren Mischungen,
c) 0,5 bis 20 Gew.-Teilen mindestens eines Glycidylesters einer α-Alkylalkanmonocarbonsäure mit 5 bis 10 C-Atomen im Carbonsäurerest,
d) 20 bis 65 Gew.-Teilen Styrol,
e) 10 bis 50 Gew.-Teilen Hydroxyethylacrylat, Hydroxyethylmethacrylat oder deren Mischungen,
f) 0 bis 35 Gew.-Teilen Ethylacrylat, Butylacrylat, 2-Ethylhexylacrylat, Isobornylacrylat, Methylmethacrylat, Ethylmethacrylat, Butylmethacrylat, 2-Ethylhexylmethacrylat, Cyclohexylmethacrylat, Isobornylmethacrylat oder deren Mischungen,
g) 0,7 bis 11,2 Gew.-Teilen Acrylsäure, Methacrylsäure oder deren Mischungen und
h) 3 bis 20 Gew.-Teilen Vinylester aliphatischer, gegebenenfalls verzweigter Monocarbonsäuren mit 3 bis 9 Kohlenstoffatomen im Säurerest, Di-(cyclo)alkylester der Malein- und/oder Fumarsäure mit 1 bis 8 C-Atomen im Alkoholrest oder deren Mischungen,
wobei die Summe der Gew.-Teile der Komponenten a) bis h) 100 beträgt und 3 bis 20 % der OH-Gruppen sekundär sind.

Als Ausgangsmaterialien a) für die erfindungswesentlichen Pfropfcopolymerisate A) sind grundsätzlich alle Polybutadiene geeignet, die mindestens 20 % seitenständige 1,2-Vinyldoppelbindungen besitzen.

Es eignen sich bevorzugt Polybutadiene mit einem Gehalt an vinylischen Doppelbindungen von ≥30 %. Dabei kann der Rest an Doppelbindungen aus einem beliebigen Verhältnis von 1,4-cis- und 1,4-trans-Struktur bestehen. Auch Polybutadiene, die daneben noch Doppelbindungen in cyclischen Strukturen aufweisen sind als Komponente a) geeignet. Ein besonders geeignetes Ausgangsmaterial ist ein Produkt mit ≥40 % 1,2-Vinyldoppelbindungen.

Im allgemeinen wird man Isomerengemische von Polybutadienen einsetzen, z.B. Polybutadiene, die 30 bis 90 % 1,2-vinylische Doppelbindungen, 10 bis 70 % Gemische von 1,4-cis und 1,4-trans-Dop-pelbindungen und 0 bis 30 % cyclische Anteile aufweisen. Weiterhin können die Polybutadiene gegebenenfalls funktionelle Gruppen tragen, z. B. Hydroxylgruppen, Carboxylgruppen etc.

Solche Polybutadiene mit unterschiedlicher Konfiguration sind bekannt, z.B. "Makromoleküle" von H. G. Elias, 4. Auflage, Hüthig und Wepf-Verlag, Basel, Heidelberg, New York, Seiten 676 sowie 744 bis 746 und 1012 ff.

Als Ausgangskomponente c) für die erfindungsgemäßen Pfropfcopolymerisate A) eignen sich beispielsweise Glycidylester der 2,2-Dimethylpropionsäure, der 2-Ethylhexansäure und/oder der Neosäuren, wie Neodecan(C10)säure oder Neononan(C9)säure. Die Alkylreste können bei diesen Neosäuren eine unterschiedliche Anzahl an C-Atomen besitzen. Besonders bevorzugt ist der Glycidylester der Versaticsäure (10 C-Atome im Säurerest, z. B. Cardura E 10® von Shell).

Die Monomeren bzw. Oligomeren a) bis h) werden im allgemeinen in den gleichen Verhältnissen, wie sie zur Polymerisation eingesetzt werden, in das Pfropfcopolymerisat eingebaut. Die eingebauten Einheiten können im wesentlichen statistisch verteilt sein. Es ist möglich, daß die Komponente b) im wesentlichen am Ende einer Polymerkette angeordnet ist, das heißt als Kettenabbrecher wirkt und auch nicht vollständig in das Pfropfcopolymerisat eingebaut wird. Sie liegt dann zum Teil als Restmonomer in dem gelösten Pfropfcopolymerisat vor und verbleibt entweder im Produkt als zusätzliches Lösemittel oder kann destillativ zusammen mit Lösemittel und weiteren flüchtigen Bestandteilen entfernt werden.

Als Lösemittel bei der Herstellung der Komponente A) eignen sich z.B. aliphatische, cycloaliphatische und/oder aromatische Kohlenwasserstoffe, wie Alkylbenzole, z.B. Toluol, Xylol; Ester, wie Ethylacetat, n-Propylacetat, Isopropylacetat, n-Butylacetat, Acetate mit längeren Alkoholresten, Butylpropionat, Pentylpropionat, Ethylenglykolmonoethyletheracetat, das entsprechende Methyletheracetat; Ether wie Ethylenglykolacetatmonomethyl-, -ethyl- oder -butylether; Ketone wie Methylamylketon, Methylisobutylketon, Glykole, Alkohole, Lactone oder dergleichen oder Gemische derartiger Lösemittel.

Die Herstellung der Pfropfcopolymerisate A) kann kontinuierlich oder diskontinuierlich erfolgen. Üblicherweise wird in einen Polymerisationsreaktor gleichmäßig und kontinuierlich die Monomermischung und der Initiator eindosiert und gleichzeitig die entsprechende Menge Polymerisat kontinuierlich abgeführt. Vorzugsweise können so chemisch nahezu einheitliche Copolymere hergestellt werden. Chemisch nahezu einheitliche Copolymere können auch hergestellt werden, indem man die Monomermischung und den Initiator mit konstanter Geschwindigkeit in den Polymerisationsreaktor eindosiert, ohne das Polymerisat abzuführen.

Die Pfropfcopolymerisation erfolgt im Temperaturbereich von 140 bis 240°C, vorzugsweise 160 bis 210°C unter einem Druck von bis zu 25 bar. Die Initiatoren werden in Mengen von 0,05 bis 15 Gew.-%, vorzugsweise 1 bis 10 Gew.-%, bezogen auf die Gesamtmenge der Komponenten a) bis h), eingesetzt.

Geeignete Initiatoren zur Herstellung der Pfropfcopolymerisate A) sind übliche Radikalstarter auf Azo- oder Peroxidbasis, jedoch nur solche, die in dem oben genannten Temperaturbereich eine für die Polymerisation genügend lange Halbwertszeit von ca. 5 Sekunden bis ca. 30 Minuten besitzen. Geeignet sind beispielsweise 2,2'-Azobis-(2-methylpropannitril), 2,2'-Azobis-(2-methylbutannitril), 1,1'-Azobis(cyclohexancarbonitril), tert.-Butylperoxy-2-ethylhexanoat, tert.-Butylperoxydiethylacetat, tert.-Butylperoxyisobutyrat, 1,1-Di-tert.-butylperoxy-3,3,5-trimethylcyclohexan, 1,1-Di-tert.-butylperoxycyclohexan, tert.-Butylperoxy-3,5,5-trimethylhexanoat, tert.-Butylperoxyisopropylcarbonat, tert.-Butylperoxyacetat, tert.-Butylperoxybenzoat, Dicumylperoxid, tert.-Butylcumylperoxid, Di-tert.-butylperoxid und Di-tert.-amylperoxid.

Die erfindungswesentlichen Pfropfcopolymerisate A) stellen wertvolle Bindemittelkomponenten für festkörperreiche Zweikomponenten-Lacke dar. Unter "Zweikomponenten-Lacken" sind in diesem Zusammenhang sowohl "Eintopf-Systeme" als auch "Zweitopf-Systeme" zu verstehen. Da es sich bei den erfindungsgemäßen Polymerisatharzen um Bindemittelkomponenten für Zweikomponenten-Lacke handelt, enthalten die Lacke neben den erfindungsgemäßen Polymerisatharzen (und gegebenenfalls weiteren Polyhydroxylverbindungen und/oder aminischen Reaktivverdünnern) eine Härterkomponente. Falls es sich bei diesem Härter beispielsweise um ein Polyisocyanat mit freien Isocyanatgruppen handelt, können die gebrauchsfertigen Beschichtungsmittel erst kurz vor ihrer Verarbeitung durch Abmischen der Komponenten hergestellt werden. In einem solchen Fall würde es sich um ein "Zweitopf-System" handeln. Falls es sich jedoch bei dem Härter um eine Verbindung handelt, die mit den erfindungsgemäßen Polymerisatharzen erst bei erhöhter Temperatur reagiert, beispielsweise um Polyisocyanate mit blockierten Isocyanatgruppen, kann der Härter auch bereits bei Raumtemperatur mit dem Polymerisatharz zu einem bei Raumtemperatur lagerfähigen "Eintopf-System" vereinigt werden.

Bei der erfindungsgemäßen Verwendung der erfindungswesentlichen Pfropfcopolymerisate werden diese gegebenenfalls in Abmischung mit anderen, aus der Polyurethanlacktechnologie bekannten, organischen Polyhydroxylverbindungen als Polyhydroxyl-Komponente und/oder in Abmischung mit aminischen Reaktivverdünnern eingesetzt. Bei diesen anderen Polyhydroxylverbindungen kann es sich um die üblichen Polyester-, Polyether-, Polycarbonat-, Polyurethan- oder Polyacrylatpolyole handeln. Vorzugsweise werden als weitere organische Polyhydroxylverbindungen, falls solche überhaupt neben den erfindungswesentlichen Pfropfcopolymerisaten zum Einsatz gelangen, die an sich bekannten Polyacrylatpolyole und/oder Polyesterpolyole des Standes der Technik eingesetzt. Bei den aminischen Reaktivverdünnern kann es sich um Produkte mit blockierten Aminogruppen, wie z.B. Aldimine oder Ketimine, oder um solche, die noch freie, jedoch in ihrer Reaktivität abgeschwächte Aminogruppen aufweisen, wie z.B. Asparaginsäureester, handeln. In aller Regel weisen die aminischen Reaktivverdünner mehr als eine (blockierte) Aminogruppe auf, sodaß sie bei der Vernetzungsreaktion zum Aufbau des polymeren Lackfilmnetzwerkes beitragen.

Bei der erfindungsgemäßen Verwendung der erfindungswesentlichen Pfropfcopolymerisate können diese in Abmischung mit bis zu 70, vorzugsweise bis zu 50 Gew.-% an anderen Polyolen und/oder aminischen Reaktivverdünnern der beispielhaft genannten Art zum Einsatz gelangen. Besonders bevorzugt werden jedoch die erfindungswesentlichen Pfropfcopolymerisate als alleinige Polyol-Komponente bei der erfindungsgemäßen Verwendung eingesetzt.

Der Hydroxylgruppengehalt der Pfropfcopolymerisate A) liegt bei 0,53 bis 8,76 Gew.-%, vorzugsweise bei 0,88 bis 8,03 Gew.-% und besonders bevorzugt bei 1,31 bis 7,3 Gew.-%.

Als Reaktionskomponente B) für die erfindungswesentlichen hydroxylhaltigen Pfropfcopolymerisatharze A) zur Herstellung der erfindungsgemäßen Bindemittelkombinationen für Überzüge und Beschichtungen kommen Vernetzungsreagentien in Betracht, die durch chemische Reaktionen mit den Hydroxylgruppen der Pfropfcopolymerisatharze zu einer Aushärtung der erfindungsgemäßen Überzüge führen, wie Aminoplastharze, z.B. entsprechende Melamin-Derivate, wie alkoxylierte Melaminharze oder Melamin-Formaldehyd-Kondensationsprodukte (z.B. FR-PS 943 411, von D. H. Salomon in "The Chemistry of Organic Filmformers", Seiten 235-240, John Wiley & Sons, Inc., New York, 1974) und übliche Vernetzungsmittel, z. B. mit alkoholischen Hydroxylgruppen reaktionsfähige Epoxide, Carbonsäureanhydride, Phenolplastharze, Resolharze, Harnstoffharze oder Guanidinharze bzw. deren Gemische.

Als bevorzugte Reaktionskomponente B) für die erfindungswesentlichen Pfropfcopolymerisate A) zur Herstellung der erfindungsgemäßen Bindemittelkombinationen für Überzüge und Beschichtungen kommen marktübliche, gegebenenfalls blockierte, Lackpolyisocyanate, das heißt vor allem die bekannten Urethangruppen, Uretdiongruppen, Allophanatgruppen und insbesondere Biuretgruppen bzw. Isocyanuratgruppen aufweisenden Modifizierungsprodukte von einfachen Diisocyanaten, wie z.B. 1,6-Diisocyanatohexan, 1 -Isocyanato-3-isocyanatomethyl-3,5,5-trimethylcyclohexan (Isophorondiisocyanat), 1-Methyl-2,4-diisocyanatocyclohexan und seine Gemische mit bis zu 35 Gew.-%, bezogen auf Gesamtgemisch, an 1-Methyl-2,6-diisocyanatocyclohexan; 2,4-Diisocyanatotoluol und seine Gemische mit bis zu 35 Gew.-%, bezogen auf Gesamtgemisch, an 2,6-Diisocyanatotoluol oder deren Gemische. Besonders bevorzugt werden die entsprechenden "Lackpolyisocyanate" mit aliphatisch und/oder cycloaliphatisch gebundenen, freien Isocyanatgruppen eingesetzt. Geeignete Blockierungsmittel für gegebenenfalls zum Einsatz kommende blockierte Polyisocyanate sind z.B. ε-Caprolactam, Butanonoxim, Phenol bzw. Phenolderivate, sekundäre Amine, Malonsäurealkylester etc..

Zu den Urethangruppen aufweisenden "Lackpolyisocyanaten" gehören z.B. die Umsetzungsprodukte von 2,4- und gegebenenfalls 2,6-Diisocyanatotoluol oder 1-Methyl-2,4- und gegebenenfalls 1-Methyl-2,6-diisocyanatocyclohexan mit unterschüssigen Mengen an Trimethylolpropan, bzw. dessen Gemischen mit einfachen Diolen, wie z.B. den isomeren Propan- oder Butandiolen. Die Herstellung derartiger, Urethangruppen aufweisender Lackpolyisocyanate in praktisch monomerfreier Form ist beispielsweise in der DE-A 1 090 196 beschrieben.

Zu den Biuretgruppen aufweisenden Lackpolyisocyanaten, die bei der erfindungsgemäßen Verwendung besonders bevorzugt sind, gehören insbesondere jene auf Basis von 1,6-Diisocyanatohexan, deren Herstellung beispielsweise in EP-A 0 003 505, DE-A 1 101 394, US-A 3 358 010 oder US-A 3 903 127 beschrieben ist.

Zu den ebenfalls bevorzugten, Isocyanuratgruppen aufweisenden Lackpolyisocyanaten gehören insbesondere die Trimerisate bzw. Mischtrimerisate der oben beispielhaft genannten Diisocyanate, wie z.B. die Isocyanuratgruppen aufweisenden Polyisocyanate auf Basis Diisocyanatotoluol gemäß GB-A 1 060 430, 1 506 373 oder 1 485 564, die Mischtrimerisate von Diisocyanatotoluol mit 1,6-Diisocyanatohexan, die beispielsweise gemäß DE-A 1 644 809 oder 3 144 672 zugänglich sind und insbesondere die aliphatischen bzw. die aliphatisch-cycloaliphatischen Trimerisate bzw. Mischtrimerisate auf Basis von 1,6-Diisocyanatohexan und/oder Isophorondiisocyanat, die beispielsweise gemäß US-A 4 324 879, US-A 4 288 586, DE-A 3 100 262, 3 100 263, 3 033 860 oder 3 144 672 erhältlich sind.

Die bei der erfindungsgemäßen Verwendung zum Einsatz gelangenden Lackpolyisocyanate weisen einen Isocyanatgehalt von 5 bis 25 Gew.-%, eine mittlere NCO-Funktionalität von 2,0 bis 5,0, vorzugsweise 2,8 bis 4,0 und einen Restgehalt an, zu ihrer Herstellung eingesetzten, monomeren Diisocyanaten von unter 2 Gew.-%, vorzugsweise unter 0,5 Gew.-% auf. Selbstverständlich können auch beliebige Gemische der beispielhaft genannten Lackpolyisocyanate zum Einsatz gelangen.

In den bei der erfindungsgemäßen Verwendung zum Einsatz gelangenden, festkörperreichen Zweikomponenten-Polyurethanlacken liegen die Polyolkomponente und die Polyisocyanatkomponente in einem Äquivalentverhältnis von Isocyanatgruppen zu Hydroxylgruppen von 5:1 bis 1:2, vorzugsweise 1,5:1 bis 1:1,2 entsprechenden Mengen vor. Die durch Vermischen der beiden Komponenten erhaltenen Zweikomponenten-Bindemittel haben nur eine begrenzte Verarbeitungszeit von ca. 4 bis 24 Stunden und werden entweder als solche (lösungsmittelfreie Klarlacke), vorzugsweise jedoch unter Mitverwendung der üblichen Hilfs- und Zusatzmittel verarbeitet. Diese gegebenenfalls mitzuverwendenden Hilfs- und Zusatzmittel können entweder dem Gemisch oder den Einzelkomponenten vor deren Durchmischung hinzugefügt werden.

Als Hilfs- und Zusatzmittel kommen beispielsweise Lösungsmittel in Betracht, wie z. B. Ethylacetat, n-Propylacetat, iso-Propylacetat, n-Butylacetat, n-Hexylacetat, n-Heptylacetat, 2-Ethylhexylacetat, Methoxypropylacetat, Methylethylketon, Methylisobutylketon, Toluol, Xylol, höhere Aromatengemische, Testbenzin oder beliebige Gemische dieser Lösungsmittel.

Weitere, gegebenenfalls mitzuverwendende Hilfs- und Zusatzmittel sind z.B. Weichmacher, wie z.B. Trikresylphosphat, Phthalsäurediester, Chlorparaffine; Pigmente und Füllstoffe, wie Titandioxid, Bariumsulfat, Kreide, Ruß; Katalysatoren, wie z. B. N,N-Dimethylbenzylamin, N-Methylmorpholin, Zinkoctoat, Zinn-II-octoat oder Dibutylzinndilaurat; Verlaufsmittel; Verdickungsmittel; gegebenenfalls Stabilisatoren, wie substituierte Phenole; organofunktionelle Silane als Haftvermittler sowie Lichtschutzmittel und UV-Absorber. Derartige Lichtschutzmittel sind beispielsweise sterisch gehinderte Amine, wie sie z. B. in DE-A 2 417 353 (= US-A 4 123 418 und US-A 4 110 304) und DE-A 2 456 864 (= US-A 3 993 655 und US-A 4 221 701) beschrieben sind. Besonders bevorzugte Verbindungen sind: Bis-(1,2,2,6,6-pentamethylpiperidyl-4)-sebacat, Bis-(2,2,6,6-tetramethylpiperidyl-4)-sebacat, n-Butyl-(3,5-di-tert.-butyl-4-hydroxybenzyl)-malonsäure-bis-(1,2,2,6,6-pentamethylpiperidyl-4)-ester.

Die den Füllstoffen und Pigmenten anhaftende Feuchtigkeit kann durch vorhergehende Trocknung oder durch Mitverwendung von wasseraufnehmenden Stoffen, wie z. B. Molekularsieb-Zeolithen, entfernt werden.

Die Trocknung, der bei der erfindungsgemäßen Verwendung resultierenden Lackfilme kann bei Verwendung von Blockierungsmittel-freien Polyisocyanaten als Vernetzer bei Raumtemperatur erfolgen und bedarf keiner Temperaturerhöhung, um die eingangs erwähnten, optimalen Eigenschaften zu erreichen. Bei Anwendung der Bindemittel als Reparaturlack ist jedoch oftmals eine Temperaturerhöhung auf ca. 60 bis 100°C, vorzugsweise 60 bis 80°C, während eines Zeitraumes von 20 bis 60 Minuten empfehlenswert, um die Trocknungs- und Härtungszeit zu verkürzen.

Bei Verwendung von blockierten Polyisocyanaten bzw. den anderen zuvor genannten Produktgruppen als Vernetzer müssen für die Trocknung bzw. Härtung der Lackfilme höhere Temperaturen von beispielsweise 100 bis 240°C, vorzugsweise 120 bis 220°C angewendet werden.

Die entstehenden Lackfilme zeichnen sich durch eine hohe Härte, eine gute Elastizität, eine ausgezeichnete Witterungs- und Chemikalienbeständigkeit sowie einen hohen Glanz aus. Die Härtungszeiten sowohl für die physikalische Antrocknung als auch die chemische Vernetzung sind sehr kurz, so daß entsprechend beschichtete Gebrauchsgegenstände sehr schnell gegenüber Lösemitteln und Chemikalien resistent sind und in Gebrauch genommen werden können.

Die erfindungsgemäß zum Einsatz gelangenden Lacke eignen sich daher vor allem für die Lackierung von Großfahrzeugen, wie z.B. Flugzeuge, Eisenbahn- und Straßenbahnwaggons, LKW-Aufbauten und dgl. Ein weiteres bevorzugtes Einsatzgebiet besteht in ihrer Verwendung als Autoreparaturlack. Weiterhin geeignet sind die Lacke für Korrosionsschutzanwendungen, wie z.B. die Beschichtung von Brücken und Strommasten, für die Holz- und Möbellackierung, die allgemeine Industrielackierung und für die Autoerstlackierung.

Die Applikation der erfindungsgemäßen Lacke erfolgt nach üblichen Methoden, beispielsweise durch Spritzen, Gießen, Tauchen, Streichen, Sprühen oder Walzen. Die erfindungsgemäßen Lacke eignen sich sowohl zur Herstellung von Grundierungen als auch zur Herstellung von Zwischenschichten und insbesondere zur Herstellung von Deckschichten auf den zu lackierenden Substraten.

### Beispiele

Alle Prozentangaben beziehen sich, falls nicht anders vermerkt, auf das Gewicht.
1. Allgemeine Herstellvorschrift für die erfindungswesentlichen Pfropfcopolymerisate A1 bis A6 und das Vergleichsprodukt V1
In einem 5-1-Edelstahldruckreaktor mit Rührer, Destillationseinrichtung, Vorlagebehältern für Monomermischung und Initiator inklusive Dosierpumpen sowie automatischer Temperaturregelung wird Teil I vorgelegt und auf die gewünschte Polymerisationstemperatur (bei den Beispielen 195°C) aufgeheizt. Dann werden durch separate Zuläufe gemeinsam beginnend Teil II (Monomermischung) in 1,5 Stunden und Teil III (Initiator) in 1,75 Stunden zudosiert, wobei die Polymerisationstemperatur nahezu (±2°C) konstant gehalten wird. Anschließend wird 30 Minuten bei der Polymerisationstemperatur nachgerührt. Dann wird auf Raumtemperatur abgekühlt und der Festgehalt bestimmt. Die Pfropfcopolymerisate sollten einen Festgehalt von 75 ± 1 % haben, wobei ein Teil des verwendeten α-Olefins nicht in das Polymer eingebaut wird. Bei einem Festgehalt von ≤73 % wird mit 5 % der ursprünglichen Initiatormenge bei 150°C 30 Minuten nachaktiviert. Bei einem Festgehalt zwischen 73 und 74 % wird auf 75 ± 1 % andestilliert. Danach wird das Pfropfcopolymerisat über einen Filter (Seitz Supra 5500) filtriert. Die Zusammensetzungen der Teile I bis III sowie die Kenndaten der erhaltenen Produkte sind in Tabelle I aufgeführt.
2. Nachstellung des Copolymers 2 der EP-A 638 591 als Vergleichsbeispiel V2
Gemäß der Herstellvorschrift und der Zusammensetzung wurde das Copolymerisat 2 der EP-A 638 591 exakt nachgestellt. Es wurde ein Produkt mit folgenden Kenndaten erhalten:

| | |
|---|---|
| Festgehalt | 74,2 % |
| Viskosität bei 23 °C | 8450 mPa.s |
| Säurezahl, Lff/FH | 7,5 / 10,1 |
| Hydroxylzahl, Lff/FH | 109 /147 |
| Hazen-Farbzahl | 65 APHA |
| Aussehen | klar |

**Tabelle 1:**

| Zusammensetzungen und Kenndaten der erfindungswesentlichen Pfropfcopolymerisate A1 bis A6 und des Vergleichsproduktes V1 | | | | | | | |
|---|---|---|---|---|---|---|---|
| **Copolymerisat** | A1 | A2 | A3 | A4 | A5 | A6 | V1 |
| **Zusammensetzung** | | | | | | | |
| Teil 1 | | | | | | | |
| Butylacetat | 15,00 | 15,00 | 15.00 | 15,00 | 15,00 | 15,00 | 15,00 |
| 1-Decen | 8,00 | 8,00 | 8,70 | 8,91 | 8,00 | 8,51 | 9,40 |
| Vinylester VeoVa 9¹⁾ | 6,48 | 6,48 | 6,40 | 5,67 | 5,00 | 4,86 | - |
| Cardura E 10²⁾ | 11,91 | 9,53 | 6,53 | 4,05 | 6,53 | 4,05 | - |
| | | | | | | | |
| Teil 2 | | | | | | | |
| Styrol | 27,06 | 28,89 | 30,37 | 31.69 | 32,47 | 33,71 | 33,00 |
| HEMA | 18,61 | 19,85 | 21.09 | 22,32 | 21,09 | 22,32 | 23,00 |
| Butylacrylat | - | - | - | - | - | - | 9,20 |
| Polybutadien® Lithene AL³) | 0,81 | 0,81 | 0,81 | 0,81 | 0,81 | 0,81 | - |
| Acrylsäure | 4,89 | 4,20 | 3,45 | 2,69 | 3,45 | 2,69 | 1,40 |
| | | | | | | | |
| Teil 3 | | | | | | | |
| Di-tert.-butylperoxid | 3,24 | 3,24 | 3,65 | 4,86 | 3,65 | 4,05 | 5,00 |
| Butylacetat | 4,00 | 4,00 | 4,00 | 4,00 | 4,00 | 4,00 | 4,00 |
| | | | | | | | |

| **Kenndaten** | | | | | | | |
|---|---|---|---|---|---|---|---|
| Festgehalt, % | 75,1 | 75,3 | 75,9 | 74,3 | 76,0 | 76,0 | 74,6 |
| Viskosität, mPa.s | 5125 | 6171 | 5543 | 5020 | 6694 | 6778 | 4500 |
| Säurezahl, Lff., mg KOH/g | 12,6 | 12,4 | 12,7 | 13,7 | 13,1 | 13,0 | 13,4 |
| OH-Zahl, Lff. mg KOH/g | 106 | 106 | 100 | 103 | 103 | 101 | 98 |
| OH-Gehalt, FH, % | 4,2 | 4,2 | 4,0 | 4,2 | 4,1 | 4,0 | 4,0 |
| Farbzahl, APHA | 60 | 50 | 55 | 45 | 20 | 45 | 10 |
| Aussehen | klar | klar | klar | klar | klar | klar | klar |

| | | | | | | | |
|---|---|---|---|---|---|---|---|
| ¹⁾ und ²⁾ Handelsprodukte von Shell. | | | | | | | |
| ³⁾ Handelsprodukt von Chemetall, Frankfurt | | | | | | | |

3. Verwendungsbeispiel
Dieses Beispiel beschreibt die Herstellung gebrauchsfertiger Lacke auf Basis der Polyacrylatpolyole A1 bis A6 und V1 und V2, deren Applikation und die Prüfung der resultierenden Lackfilme.
Zur Beurteilung der allgemeinen Lackeigenschaften wurden Klarlacke hergestellt. Dazu wurden die Polyole A1 bis A6 sowie V1 und V2 mit einem Lackpolyisocyanat versetzt, wobei ein NCO/OH-Verhältnis von ca. 1:1 eingehalten wurde. Als Lackpolyisocyanat diente ® Desmodur N 3390, ein Isocyanuratgruppen-enthaltendes Polyisocyanat auf Basis 1,6-Diisocyanatohexan, 90%ig gelöst in Butylacetat/Solvent Naphtha 100 (1:1); NCO-Gehalt der Lösung: ca. 19,4 Gew.-%, Gehalt der Lösung an freiem 1,6-Diisocyanatohexan: unter 0,5 %. Bezogen auf Festharz (Summe der festen Anteile an Polyol und Polyisocyanat) wurden folgende Anteile an Zusatzstoffen verwendet.

| Bestandteile | Gew.-% fest auf fest |
|---|---|
| Dabco 33 LV (PUR-Katalysator von Air Products, 10%ig in Butylacetat) | 0,3 |
| | |
| BYK 331 (Verlaufsmittel der BYK-Chemie, 50%ig in Butylacetat) | 0,3 |
| | |
| Tinuvin 1130 (UV-Absorber der Ciba Geigy, Basel, 50%ig in Xylol) | 2,0 |
| | |
| Tinuvin 292 (Lichtschutzmittel der Ciba Geigy, Basel, 50%ig in Xylol) | 1,0 |

Als Lösemittel wurde ein Gemisch aus Methoxypropylacetat, Xylol und n-Butylacetat (1:1:1) verwendet. Es wurde eingestellt auf einen Gehalt von:
ca. 56 Gew.-% Bindemittel,
ca. 2 Gew.-% Additive,
ca. 42 Gew.-% Lösemittel

Die Auslaufzeit (DIN 53 211, 4-mm-Düse) betrug ca. 20 s. Damit sind die Lacke spritzfertig eingestellt und besitzen nun einen VOC-Wert (volatile organic compounds) von 3,5 lbs/gal.

Die Lacke wurden auf Glasplatten aufgezogen, sowohl bei Raumtemperatur als auch 30 Minuten bei 60°C getrocknet, wobei die Trocknungsgeschwindigkeit (DIN 53 150) ermittelt wurde und dann 7 Tage bei Raumtemperatur gelagert. Die Trockenfilmstärke betrug ca. 40 bis 50 µm.

Anschließend wurde die Härte nach König (DIN 53 157), der Glanz nach Gardner im 60°-Winkel (DIN 67 530) und die Anlösbarkeit durch Superbenzin (nach 1, 2, 3 und 4 Tagen Lagerung bei Raumtemperatur) geprüft. Die Erichsentiefung wurde an entsprechend beschichteten Prüfblechen ermittelt.

Außerdem wurde die Vergilbungsresistenz bei Bestrahlung mit kurzwelligem UV-Licht im QUV-Test (QUV-Accelerated Weathering Tester, ASTM G 53-77) geprüft. Hierzu wurden auf Aluminiumbleche (68 mm x 150 mm), die zuvor grundiert und mit weißem Basislack beschichtet wurden, Klarlacke auf Basis der Polyole A 1 bis A 3 und V1 und V2 appliziert. Nach Applikation und Trocknung der Lacke (30 Minuten bei 60°C), wurden diese 7 Tage bei Raumtemperatur gelagert und anschließend im QUV-Gerät (Fa. Q-Panel Company) geprüft. Dabei wurde im Zyklus jeweils 4 h im intensiven, ungefilterten UV-Licht im Wellenlängenbereich von ca. 280 bis 370 nm (Maximum bei 313 nm) bestrahlt bzw. 4 h im Dunkeln belassen, bei einer Gesamtdauer von 1.000 h. Nach dem Abwaschen der Probe wurde mittels eines Farbmeßgerätes die Gesamtfarbdifferenz ΔE (gegenüber der nicht bewitterten Platte) als Maß für die aufgetretene Vergilbung bestimmt.

Die Prüfergebnisse von Lacken auf Basis der Copolymerisate A1 bis A6 und V1 und V2 sind in Tabelle 2 dargestellt.

**Tabelle 2:**

| Prüfergebnisse von 2K-PUR-Klarlacken auf Basis der erfindungsgemäßen Polyole A1 bis A6 und der Vergleichspolyole V1 und V2 | | | | | | | | |
|---|---|---|---|---|---|---|---|---|
| Lack auf Basis von Polyol | A1 | A2 | A3 | A4 | A5 | A6 | V1 | V2 |
| Trocknung¹⁾ bei RT T1 (Minuten) | 105 | 90 | 120 | 75 | 120 | 75 | 150 | 120 |
| T3 (Stunden) | 7,0 | 6,5 | 7,5 | 6,0 | 7,5 | 6,0 | 9 | 7,5 |
| Pendeldämpfung 23 °C + 7d RT (s) | 104 | 129 | 101 | 104 | 108 | 122 | 98 | 124 |
| 30'60 °C + 7 d RT (s) | 170 | 183 | 165 | 168 | 170 | 177 | 152 | 181 |
| Superbenzinfestigkeit²⁾ | | | | | | | | |
| 23 °C + 1 d RT, 1 Min./5 Min. | 1/1 | 0/1 | 1/1 | 0/1 | 1/1 | 0/1 | 1/2 | 2/4 |
| 23 °C + 2 d RT, 1 Min./5 Min. | 0/0 | 0/0 | 0/1 | 0/0 | 0/1 | 0/0 | 0/1 | 1/2 |
| 23 °C + 3 d RT, 1 Min./5 Min. | - | - | 0/0 | - | 0/0 | - | 0/0 | 0/1 |
| 23 °C + 4 d RT, 1 Min./5 Min. | - | - | - | - | - | - | - | 0/0 |
| Erichsentiefung (mm) | 11,0 | 10,5 | 10,5 | 11,0 | 11,0 | 10,5 | 11,0 | 10,5 |
| QUV-Test (ΔE) 500h/1.000h | 4,1/6,0 | 4,2/6,1 | 4,4/6,7 | 4,6/6,8 | 4,9/7,1 | 5,0/7,3 | 4,4/6,8 | 4,1/6,3 |
| Glanz ³⁾ (60°) 0 h/1000 h | 95/92 | 96/93 | 97/92 | 97/95 | 98/97 | 97/95 | 98/95 | 97/94 |

| | | | | | | | | |
|---|---|---|---|---|---|---|---|---|
| ¹⁾ T1 Sandtrocknung, T3 Durchtrocknung (DIN 53 150) | | | | | | | | |
| ²⁾ 0 = bester Wert (ohne Befund), 5 = schlechtester Wert (Lackfilm an der belasteten Stelle vollständig aufgelöst) | | | | | | | | |
| ³⁾ Vor und nach dem QUV-Test | | | | | | | | |

### Diskussion der Resultate

2K-PUR-Klarlacke auf Basis der Polyole A1 bis A6 haben trotz des hohen Festkörpergehaltes bei Applikation eine schnelle Trocknung bei Raumtemperatur und sind schon nach 1 bis 2 Tagen beständig gegen die Einwirkung von Superbenzin. Glanz, Elastizität und Filmhärte liegen auf hohem Niveau, vergleichbar mit heutigen Standardsystemen. Dagegen hat der Lack des Polyols V1, der unter das Anspruchsbegehren der EP-A 225 809 fällt und kein Polybutadien enthält, eine längere Trocknungszeit und eine etwas schlechtere Superbenzinfestigkeit. Der Lackfilm des Polyols V2 hat zwar eine schnelle Trocknug, aber nach einem Tag eine schlechte Superbenzinfestigkeit, die nach 2 und 3 Tagen besser wird und erst nach 4 Tagen in Ordnung ist. Die Prüfergebnisse zeigen somit deutlich, daß festkörperreiche 2K-PUR-Klarlacke auf Basis der erfindungsgemäßen Polyole A1 bis A6 trotz ihres High-Solids-Charakters sowohl eine sehr schnelle Trocknung als auch eine sehr gute Benzinbeständigkeit aufweisen und daß damit lackierte Gebrauchsgegenstände, vorzugsweise Kraftfahrzeuge und Kraftfahrzeugteile, schon nach kürzester Zeit wieder ihrer gebrauchsmäßigen Bestimmung zugeführt werden können.

## Patentansprüche

1. Bindemittelkombination, bestehend aus
A) 95 bis 40 Gew.-Teilen OH-funktioneller Pfropfcopolymerisatharze, hergestellt durch Copolymerisation von
a) 0,1 bis 10 Gew.-Teilen mindestens eines gegebenenfalls funktionellen Polybutadiens mit einem Molekulargewicht von 500 bis 10.000 und mit mindestens 20 % 1,2-Vinylstruktur,
b) 5 bis 30 Gew.-Teilen mindestens eines aliphatischen α-Olefins mit 8 bis 16 Kohlenstoffatomen,
c) 0,1 bis 35 Gew.-Teilen mindestens eines Glycidylesters einer α-Alkylalkanmonocarbonsäure mit 4 bis 30 Kohlenstoffatomen,
d) 10 bis 70 Gew.-Teilen mindestens eines ungesättigten, aromatischen Monomeren wie Styrol, α-Methylstyrol oder Vinyltoluol,
e) 5 bis 60 Gew.-Teilen mindestens eines Hydroxyalkylesters der Acryl- bzw. Methacrylsäure mit 2 bis 4 Kohlenstoffatomen im Hydroxyalkylrest und primär gebundener Hydroxylgruppe,
f) 0 bis 50 Gew.-Teilen mindestens eines (cyclo)aliphatischen Esters der Acryl- und/oder Methacrylsäure mit 1 bis 12 Kohlenstoffatomen im (Cyclo)alkylrest,
g) 0,1 bis 20 Gew.-Teilen mindestens einer α,β-monoolefinisch ungesättigten Mono- oder Dicarbonsäure mit 3 bis 7 Kohlenstoffatomen und/oder mindestens eines Maleinsäure- bzw. Fumarsäurehalbesters mit 1 bis 14 Kohlenstoffatomen im Alkoholrest,
h) 0 bis 30 Gew.-Teilen weiteren copolymerisierbaren, olefinisch ungesättigten Verbindungen und
B) 5 bis 60 Gew.-Teilen eines mehrfach funktionellen Vernetzerharzes, besonders Aminoplastharze wie alkoxylierte Melaminharze, Melamin-Formaldehyd-Kondensationsprodukte, Harnstoffharze, Guanidinharze, Phenolplastharze, Resolharze und bevorzugt, gegebenenfalls blockierte, polyfunktionelle Isocyanate, vorzugsweise oligomere Isocyanate mit Biuret-, Allophanat-, Uretdion-, Urethan und/oder Isocyanuratstruktur,
wobei jeweils die Summe der Gew.-Teile der Komponenten A) und B) sowie die Summe der Gew.-Teile der Komponenten a) bis h) 100 beträgt und 1 bis 30 % der OH-Gruppen sekundär sind.

2. Bindemittelkombinationen nach Anspruch 1, **dadurch gekennzeichnet, daß** die Pfropfcopolymerisate A) bestehen aus:
a) 0,3 bis 7,5 Gew.-Teilen eines oder mehrerer, gegebenenfalls funktioneller Polybutadiene mit einem Molekulargewicht von 500 bis 5000 und mindestens 30 % 1,2-Vinylstruktur,
b) 5 bis 25 Gew.-Teilen mindestens eines α-Olefins mit 8 bis 12 Kohlenstoffatomen,
c) 0,24 bis 27 Gew.-Teilen mindestens eines Glycidylesters einer α-Alkylalkanmonocarbonsäure mit 5 bis 20 C-Atomen im Carbonsäurerest,
d) 15 bis 65 Gew.-Teilen Styrol,
e) 7,5 bis 55 Gew.-Teilen Hydroxyethylacrylat, Hydroxyethylmethacrylat, Butandiol-1,4-monoacrylat oder deren Mischungen,
f) 0 bis 45 Gew.-Teilen mindestens eines (cyclo)aliphatischen Esters der Acryl- und/oder Methacrylsäure mit 1 bis 10 Kohlenstoffatomen im (Cyclo)alkylrest,
g) 0,4 bis 16,5 Gew.-Teilen Acrylsäure, Methacrylsäure, Maleinsäure- oder Fumarsäurehalbester mit 1 bis 8 Kohlenstoffatomen in der Alkoholkomponente oder deren Mischungen und
h) 1 bis 25 Gew.-Teilen Acrylnitril, Methacrylnitril, Hydroxypropyl(meth)acrylat (bis 10 Gew.-%), Vinylester aliphatischer, gegebenenfalls verzweigter Monocarbonsäuren mit 1 bis 10 Kohlenstoffatomen im Säurerest, Di(cyclo)alkylester der Malein- und/oder Fumarsäure mit 1 bis 8 Kohlenstoffatomen im Alkoholrest oder deren Mischungen,
wobei die Summe der Gew.-Teile der Komponenten a) bis h) 100 beträgt und 2 bis 25 % der OH-Gruppen sekundär sind.

3. Bindemittelkombinationen nach Anspruch 1, **dadurch gekennzeichnet, daß** die Pfropfcopolymerisate A) bestehen aus:
a) 0,5 bis 5 Gew.-Teilen eines oder mehrerer, gegebenenfalls funktioneller, Polybutadiene mit einem Molekulargewicht von 500 bis 3.000 und mindestens 40 % 1,2-Vinylstruktur,
b) 5 bis 20 Gew.-Teilen 1-Octen, 1-Decen oder deren Mischungen,
c) 0,5 bis 20 Gew.-Teilen mindestens eines Glycidylesters einer α-Alkylalkanmonocarbonsäure mit 5 bis 10 C-Atomen im Carbonsäurerest,
d) 20 bis 65 Gew.-Teilen Styrol,
e) 10 bis 50 Gew.-Teilen Hydroxyethylacrylat, Hydroxyethylmethacrylat oder deren Mischungen,
f) 0 bis 35 Gew.-Teilen Ethylacrylat, Butylacrylat, 2-Ethylhexylacrylat, Isobornylacrylat, Methylmethacrylat, Ethylmethacrylat, Butylmethacrylat, 2-Ethylhexylmethacrylat, Cyclohexylmethacrylat, Isobornylmethacrylat oder deren Mischungen,
g) 0,5 bis 5 Gew.-Teilen Acrylsäure, Methacrylsäure oder deren Mischungen und
h) 3 bis 20 Gew.-Teilen Vinylester aliphatischer, gegebenenfalls verzweigter Monocarbonsäuren mit 3 bis 9 Kohlenstoffatomen im Säurerest, Di(cyclo)alkylester der Malein- oder Fumarsäure mit 1 bis 8 Kohlenstoffatomen im Alkoholrest oder deren Mischungen,
wobei die Summe der Gew.-Teile der Komponenten a) bis h) 100 beträgt und 3 bis 20 % der OH-Gruppen sekundär sind.

4. Bindemittelkombinationen nach Anspruch 1, **dadurch gekennzeichnet, daß** das mehrfach funktionelle Vernetzerharz B) ein Aminoplastharz ist.

5. Bindemittelkombinationen nach Anspruch 1, **dadurch gekennzeichnet, daß** das mehrfach funktionelle Vernetzerharz B) ein alkoxyliertes Melaminharz, ein Melamin-Formaldehyd-Kondensationsprodukt, ein Harnstoffharz, ein Guanidinharz oder eine Mischung daraus ist.

6. Bindemittelkombinationen nach Anspruch 1, **dadurch gekennzeichnet, daß** das mehrfach funktionelle Vernetzerharz B) ein Phenolharz, ein Resolharz oder eine Mischung daraus ist.

7. Bindemittelkombinationen nach Anspruch 1, **dadurch gekennzeichnet, daß** das mehrfach funktionelle Vernetzerharz B) ein Polyisocyanat ist.

8. Bindemittelkombinationen nach Anspruch 1, **dadurch gekennzeichnet, daß** das mehrfach funktionelle Vernetzerharz B) ein (cyclo)aliphatisches Polyisocyanat mit freien Isocyanatgruppen und mit Biuret-, Allophanat-, Uretdion-, Urethan- und/oder Isocyanuratstruktur ist.

9. Bindemittelkombination nach Anspruch 1, **dadurch gekennzeichnet, daß** das mehrfach funktionelle Vernetzerharz B) ein (cyclo)aliphatisches Polyisocyanat mit blockierten Isocyanatgruppen und mit Biuret-, Allophanat-, Uretdion-, Urethan und/oder Isocyanuratstruktur ist.

10. Verwendung von Bindemittelkombinationen nach Anspruch 1 zur Beschichtung von Oberflächen.

11. Verwendung von Bindemittelkombinationen nach Anspruch 1 zur Beschichtung von Kraftfahrzeugen und Kraftfahrzeugteilen.

12. Verwendung von Bindemittelkombinationen nach Anspruch 1 in der Autoreparatur- und Großfahrzeuglackierung.

13. Verwendung von Bindemittelkombinationen nach Anspruch 1 im Korrosionsschutzbereich, der allgemeinen Industrie- und in der Holz- und Möbellackierung.

## Claims

1. Binder combination comprising
A) 95 to 40 parts by weight of OH-functional graft copolymer resins prepared by copolymerising
a) 0.1 to 10 parts by weight of at least one optionally functional polybutadiene with a molecular weight of 500 to 10 000 and with at least 20% 1,2-vinyl structure,
b) 5 to 30 parts by weight of at least one aliphatic α-olefin with 8 to 16 carbon atoms,
c) 0.1 to 35 parts by weight of at least one glycidyl ester of an α-alkylalkanemonocarboxylic acid with 4 to 30 carbon atoms,
d) 10 to 70 parts by weight of at least one unsaturated, aromatic monomer such as styrene, α-methyl styrene or vinyl toluene,
e) 5 to 60 parts by weight of at least one hydroxyalkyl ester of acrylic and/or methacrylic acid with 2 to 4 carbon atoms in the hydroxyalkyl radical and primarily bound hydroxyl group,
f) 0 to 50 parts by weight of at least one (cyclo)-aliphatic ester of acrylic and/or methacrylic acid with 1 to 12 carbon atoms in the (cyclo)alkyl radical,
g) 0.1 to 20 parts by weight of at least one α,β-monoolefinically unsaturated monocarboxylic or dicarboxylic acid with 3 to 7 carbon atoms and/or at least one maleic acid or fumaric acid semi-ester with 1 to 14 carbon atoms in the alcohol radical,
h) 0 to 30 parts by weight of further copolymerisable, olefinically unsaturated compounds and
B) 5 to 60 parts by weight of a multi-functional crosslinking resin, particularly amino resins, such as alkoxylated melamine resins, melamine-formaldehyde condensation products, urea resins, guanidine resins, phenolic resins, resol resins and, preferably optionally blocked, polyfunctional isocyanates, preferably oligomeric isocyanates with a biuret, allophanate, uretdione, urethane and/or isocyanurate structure,
in each case the total amount of parts by weight of the components A) and B) as well as the total amount of parts by weight of the components a) to h) being 100, and 1 to 30% by weight of the OH groups being secondary groups.

2. Binder combinations according to claim 1,
**characterised in that** the graft copolymers A) comprise:
a) 0.3 to 7.5 parts by weight of one or more, optionally functional polybutadienes with a molecular weight of 500 to 5000 and at least 30% 1,2-vinyl structure,
b) 5 to 25 parts by weight of at least one α-olefin with 8 to 12 carbon atoms,
c) 0.24 to 27 parts by weight of at least one glycidyl ester of an α-alkylalkanemonocarboxylic acid with 5 to 20 C atoms in the carboxylic acid radical,
d) 15 to 65 parts by weight of styrene,
e) 7.5 to 55 parts of weight of hydroxyethyl acrylate, hydroxyethyl methacrylate, 1,4-butanediol monoacrylate, or their mixtures,
f) 0 to 45 parts by weight of at least one (cyclo)aliphatic ester of acrylic and/or methacrylic acid wtih 1 to 10 carbon atoms in the (cyclo)alkyl radical,
g) 0.4 to 16.5 parts by weight of acrylic acid, methacrylic acid, maleic acid semi-ester or fumaric acid semi-ester with 1 to 8 carbon atoms in the alcohol component, or their mixtures, and
h) 1 to 25 parts by weight of acrylonitrile, methacrylonitrile, hydroxypropyl (meth)acrylate (up to 10 wt.%), vinyl esters of aliphatic, optionally branched monocarboxylic acids with 1 to 10 carbon atoms in the acid radical, di(cyclo)alkyl esters of maleic and/or fumaric acid with 1 to 8 carbon atoms in the alcohol radical, or their mixtures,
the total amount of the parts by weight of the components a) to h) being 100 and 2 to 25% of the OH groups being secondary OH groups.

3. Binder combinations according to claim 1,
**characterised in that** the graft copolymers A) comprise:
a) 0.5 to 5 parts by weight of one or more, optionally functional polybutadienes with a molecular weight of 500 to 3000 and at least 40% 1,2-vinyl structure,
b) 5 to 20 parts by weight of 1-octene, 1-decene or their mixtures,
c) 0.5 to 20 parts by weight of at least one glycidyl ester of an α-alkylalkanemonocarboxylic acid with 5 to 10 C atoms in the carboxylic acid radical,
d) 20 to 65 parts by weight of styrene,
e) 10 to 50 parts by weight of hydroxyethyl acrylate, hydroxyethyl methacrylate or their mixtures,
f) 0 to 35 parts by weight of ethyl acrylate, butyl acrylate, 2 ethylhexyl acrylate, isobornyl acrylate, methyl methacrylate, ethyl methacrylate, butyl methacrylate, 2-ethylhexyl methacrylate, cyclohexyl methacrylate, isobornyl methacrylate or their mixtures,
g) 0.5 to 5 parts by weight of acrylic acid, methacrylic acid or their mixtures, and
h) 3 to 20 parts by weight of vinyl esters of aliphatic, optionally branched monocarboxylic acids with 3 to 9 carbon atoms in the acid radical, di(cyclo)alkyl esters of maleic and/or fumaric acid with 1 to 8 carbon atoms in the alcohol radical, or their mixtures,
the total amount of the parts by weight of the components a) to h) being 100 and 3 to 20% of the OH groups being secondary OH groups.

4. Binder combinations according to claim 1,
**characterised in that** the multi-functional crosslinking resin B) is an amino-resin.

5. Binder combinations according to claim 1,
**characterised in that** the multi-functional crosslinking resin B) is an alkoxylated melamine resin, a melamine-formaldehyde condensation product, a urea resin, a guanidine resin or a mixture thereof.

6. Binder combinations according to claim 1,
**characterised in that** the multi-functional crosslinking resin B) is a phenolic resin, a resol resin or a mixture thereof.

7. Binder combinations according to claim 1,
**characterised in that** the multi-functional crosslinking resin B) is a polyisocyanate.

8. Binder combinations according to claim 1,
**characterised in that** the multi-functional crosslinking resin B) is a (cyclo)aliphatic polyisocyanate with free isocyanate groups and with a biuret, allophanate , uretdione, urethane and/or isocyanurate structure.

9. Binder combination according to claim 1,
**characterised in that** the multi-functional crosslinking resin B) is a (cyclo)aliphatic polyisocyanate with blocked isocyanate groups and with a biuret, allophanate, uretdione, urethane and/or isocyanurate structure.

10. Use of binder combinations according to claim 1 for coating surfaces.

11. Use of binder combinations according to claim 1 for coating vehicles and vehicle parts.

12. Use of binder combinations according to claim 1 in automotive repair painting and large vehicle painting.

13. Use of binder combinations according to claim 1 in the corrosion protection sector, general industrial painting, and in wood and furniture painting.

## Revendications

1. Combinaison de liants, constituée par
A) à concurrence de 95 à 40 parties en poids, des résines de copolymères greffés à fonctionnalité OH préparées par copolymérisation de
a) à concurrence de 0,1 à 10 parties en poids, au moins un polybutadiène le cas échéant fonctionnel possédant un poids moléculaire de 500 à 10.000 et possédant une structure 1,2-vinylique à concurrence d'au moins 20 %,
b) à concurrence de 5 à 30 parties en poids, au moins une α-oléfine aliphatique contenant de 8 à 16 atomes de carbone,
c) à concurrence de 0,1 à 35 parties en poids, au moins un ester glycidylique d'un acide α-alkylalcane-monocarboxylique contenant de 4 à 30 atomes de carbone,
d) à concurrence de 10 à 70 parties en poids, un monomère aromatique insaturé tel que le styrène, 1'α-méthylstyrène ou le vinyltoluène,
e) à concurrence de 5 à 60 parties en poids, au moins un ester hydroxyalkylique de l'acide acrylique, respectivement de l'acide méthacrylique contenant de 2 à 4 atomes de carbone dans le radical hydroxyalkyle et un groupe hydroxyle à liaison primaire,
f) à concurrence de 0 à 50 parties en poids, au moins un ester (cyclo)aliphatique de l'acide acrylique et/ou de l'acide méthacrylique contenant de 1 à 12 atomes de carbone dans le radical (cyclo)alkyle,
g) à concurrence de 0,1 à 20 parties en poids, au moins un acide monocarboxylique ou dicarboxylique à insaturation monooléfinique α,β contenant de 3 à 7 atomes de carbone et/ou au moins un demi-ester de l'acide maléique respectivement de l'acide fumarique contenant de 1 à 14 atomes de carbone dans le radical alcool,
h) à concurrence de 0 à 30 parties en poids, d'autres composés copolymérisables à insaturation oléfinique, et
B) à concurrence de 5 à 60 parties en poids, une résine de réticulation polyfonctionnelle, en particulier des résines d'aminoplaste telles que des résines de mélamine alcoxylées, des produits de condensation de mélamineformaldéhyde, des résines d'urée, des résines de guanidine, des résines de phénoplaste et des résines de résol et de préférence des isocyanates polyfonctionnels, le cas échéant bloqués, de préférence des isocyanate oligomères possédant une structure de type biuret, allophanate, uretdione, uréthanne et/ou isocyanurate,
dans laquelle, respectivement la somme des parties en poids des composants A) et B), ainsi que la somme des parties en poids des composants a) à h) s'élevent à 100 et les groupes OH sont des groupes secondaires à concurrence de 1 à 30 %.

2. Combinaisons de liants selon la revendication 1, **caractérisées en ce que** les copolymères greffés A) sont constitués par :
a) à concurrence de 0,3 à 7,5 parties en poids, un ou plusieurs polybutadiènes le cas échéant fonctionnels possédant un poids moléculaire de 500 à 5.000 et possédant une structure 1,2-vinylique à concurrence d'au moins 30 %,
b) à concurrence de 5 à 25 parties en poids, au moins une α-oléfine contenant de 8 à 12 atomes de carbone,
c) à concurrence de 0,24 à 27 parties en poids, au moins un ester glycidylique d'un acide α-alkylalcane-monocarboxylique contenant de 5 à 20 atomes de carbone dans le radical d'acide carboxylique,
d) à concurrence de 15 à 65 parties en poids, du styrène,
e) à concurrence de 7,5 à 55 parties en poids, de l'acrylate d'hydroxyéthyle, du méthacrylate d'hydroxyéthyle, du monoacrylate de butanediol-1,4 ou leurs mélanges,
f) à concurrence de 0 à 45 parties en poids, un ester (cyclo)aliphatique de l'acide acrylique et/ou de l'acide méthacrylique contenant de 1 à 10 atomes de carbone dans le radical (cyclo)alkyle,
g) à concurrence de 0,4 à 16,5 parties en poids, de l'acide acrylique, de l'acide méthacrylique, un demi-ester de l'acide maléique respectivement de l'acide fumarique contenant de 1 à 8 atomes de carbone dans le composant alcool ou leurs mélanges, et
h) à concurrence de 1 à 25 parties en poids, de l'acrylonitrile, du méthacrylonitrile, du (méth)acrylate d'hydroxypropyle (jusqu'à concurrence de 10 % en poids), des esters vinyliques d'acides monocarboxyliques le cas échéant ramifiés contenant de 1 à 10 atomes de carbone dans le radical acide, des esters di(cyclo)alkyliques de l'acide maléique et/ou de l'acide fumarique contenant de 1 à 8 atomes de carbone dans le radical alcool ou leurs mélanges,
dans lesquelles, la somme des parties en poids des composants a) à h) s'élève à 100 et les groupes OH sont des groupes secondaires à concurrence de 2 à 25 %.

3. Combinaisons de liants selon la revendication 1, **caractérisées en ce que** les copolymères greffés A) sont constitués par :
a) à concurrence de 0,5 à 5 parties en poids, un ou plusieurs polybutadiènes le cas échéant fonctionnels possédant un poids moléculaire de 500 à 3.000 et possédant une structure 1,2-vinylique à concurrence d'au moins 40 %,
b) à concurrence de 5 à 20 parties en poids, du 1-octène, du 1-décène ou leurs mélanges,
c) à concurrence de 0,5 à 20 parties en poids, au moins un ester glycidylique d'un acide α-alkylalcane-monocarboxylique contenant de 5 à 10 atomes de carbone dans le radical d'acide carboxylique,
d) à concurrence de 20 à 65 parties en poids, du styrène,
e) à concurrence de 10 à 50 parties en poids, de l'acrylate d'hydroxyéthyle, du méthacrylate d'hydroxyéthyle ou leurs mélanges,
f) à concurrence de 0 à 35 parties en poids, de l'acrylate d'éthyle, de l'acrylate de butyle, de l'acrylate de 2-éthylhexyle, de l'acrylate d'isobornyle, du méthacrylate de méthyle, du méthacrylate d'éthyle, du méthacrylate de butyle, du méthacrylate de 2-éthylhexyle, du méthacrylate de cyclohexyle, du méthacrylate d'isobornyle ou leurs mélanges,
g) à concurrence de 0,5 à 5 parties en poids, de l'acide acrylique, de l'acide méthacrylique ou leurs mélanges, et
h) à concurrence de 3 à 20 parties en poids, des esters vinyliques d'acides monocarboxyliques aliphatiques le cas échéant ramifiés contenant de 3 à 9 atomes de carbone dans le radical acide, des esters di(cyclo)alkyliques de l'acide maléique et/ou de l'acide fumarique contenant de 1 à 8 atomes de carbone dans le radical alcool ou leurs mélanges,
dans lesquelles, la somme des parties en poids des composants a) à h) s'élève à 100 et les groupes OH sont des groupes secondaires à concurrence de 3 à 20 %.

4. Combinaisons de liants selon la revendication 1, **caractérisées en ce que** la résine de réticulation B) polyfonctionnelle est une résine d'aminoplaste.

5. Combinaisons de liants selon la revendication 1, **caractérisées en ce que** la résine de réticulation B) polyfonctionnelle est une résine de mélamine alcoxylée, un produit de condensation de mélamineformaldéhyde, une résine d'urée, une résine de guanidine ou un mélange de ces résines.

6. Combinaisons de liants selon la revendication 1, **caractérisées en ce que** la résine de réticulation B) polyfonctionnelle est une résine de phénoplaste, une résine de résol ou un mélange de ces résines.

7. Combinaisons de liants selon la revendication 1, **caractérisées en ce que** la résine de réticulation B) polyfonctionnelle est un polyisocyanate.

8. Combinaisons de liants selon la revendication 1, **caractérisées en ce que** la résine de réticulation B) polyfonctionnelle est un polyisocyanate (cyclo)aliphatique contenant des groupes isocyanate libres et possédant une structure de type biuret, allophanate, uretdione, uréthanne et/ou isocyanurate.

9. Combinaisons de liants selon la revendication 1, **caractérisées en ce que** la résine de réticulation B) polyfonctionnelle est un polyisocyanate (cyclo)aliphatique contenant des groupes isocyanate bloqués et possédant une structure de type biuret, allophanate, uretdione, uréthanne et/ou isocyanurate.

10. Utilisation de combinaisons de liants selon la revendication 1 pour l'enduction de surfaces.

11. Utilisation de combinaisons de liants selon la revendication 1 pour la peinture de véhicules automobiles et de pièces détachées pour des véhicules automobiles.

12. Utilisation de combinaisons de liants selon la revendication 1 dans le domaine de la réparation automobile et de la peinture des véhicules de grandes dimensions.

13. Utilisation de combinaisons de liants selon la revendication 1 dans le domaine de la protection contre la corrosion, du laquage, du vernissage et de la peinture à l'échelle industrielle en général et dans le domaine du bois et du mobilier.
